# EUROPEAN PATENT APPLICATION

(11) **EP 1 693 801 A2**
(43) Date of publication of application: **23.08.2006**
(21) Application number: 06003192.9
(22) Date of filing: 16.02.2006
(51) Int. Cl.: G07C 9/00

(54) **Biometric-based systems and methods for identity verification**

(30) Priority: 16.02.2005 US 653678 P
(71) Applicant: Schaufele, David, Parksville BC V9P A1A (CA); Cihi, Guy, Saipan MP 96950 (US)
(72) Inventor: Schaufele, David, Parksville BC V9P A1A (CA); Cihi, Guy, Saipan MP 96950 (US)
(74) Representative: Grünecker, Kinkeldey, Stockmair & Schwanhäusser Anwaltssozietät

(57) **Abstract**

Biometric-based systems and corresponding methods for identity verification are disclosed herein. A security system in accordance with one embodiment of the invention can include an audio input module configured to receive and digitize a spoken utterance from a person and a video input module configured to receive multiple digital images of at least a portion of the person at least approximately contemporaneously with receiving the spoken utterance from the person. The security system can also include a first data processing module configured to receive the digitized spoken utterance and digital images of the person and correlate them together to form a biometric template for the person. The security system further includes a memory storing prerecorded audio and video data as individual templates of individual people and a second data processing module configured to receive the biometric template and compare it for a match with one of the stored templates of audio and video data.

## Description

### CROSS-REFERENCE TO RELATED APPLICATION(S)

This application claims the benefit of U.S. Provisional Application No. 60/653,678, filed February 16, 2005 (Attorney Docket No. 57295-8001 US).

### TECHNICAL FIELD

The following disclosure relates generally to biometric-based systems and methods for identity verification and, more specifically, to biometric systems and corresponding methods for verifying an individual's identity, authenticating documents, and/or monitoring public health.

### BACKGROUND

Biometrics is the science of using measurable biological properties to identify individuals. The use of biometric-based identification systems is becoming increasingly popular because such systems can provide substantially more security than many traditional security systems (e.g., usernames, passwords or personal identification numbers (PINs)). Biometric markers or templates used for personal identification can include, for example, measurements of unique visible features, such as fingerprints, hand and face geometry, and retinal and iris patterns, as well as the measurement of unique behavioral responses, such as the recognition of vocal patterns and the analysis of hand movements.

**.** Biometric-based systems generally require a device for measuring and recording the biological measurements in electronic form and comparing the measurements to a known value. Many conventional systems, for example, rely on digital imaging technologies. The raw biometric data of an individual's presumably unique features is obtained by a system including optics, a camera, and other electronic equipment configured to capture and digitize images. The digital representation of the images (i.e., the raw or unprocessed image data) is then processed by an algorithm that converts the image data into a particular representation (i.e., a biometric marker or template). The biometric marker or template is then compared with one or more previously stored values. If the values match within a desired level of accuracy, the person is identified and/or authorized.

Several types of technologies can be used for biometric identification of superficial anatomical traits. Biometric fingerprint identification systems, for example, generally require an individual under test to place his or her finger on a visual scanner. The scanner reflects light off of the person's finger and records the way the light is reflected off of the ridges that make up the fingerprint. Other systems can employ differing pressures or other means to "read" a person's fingerprint. Another example includes hand and face identification systems that use scanners and/or cameras to detect the relative anatomical structure, spacing, and/or geometry of a person's face or hand. Still another example is biometric authentication of an individual's eye. Retinal scans generally require a person to place his or her eye close to or upon a retinal scanning device. The scanning device then scans the retina to form an electronic version of the highly detailed, unique blood vessel pattern of the person's retina.

Other types of technologies can be used for biometric identification of behavioral traits. Voice recognition systems, for example, generally use a microphone or other suitable recording device to capture and record the voice pattern of an individual. The individual typically repeats a standard word or phrase and the biometric device compares the measured voice pattern to one or more voice patterns stored in the system. Still another example includes biometric signature authentication in which the verification process includes not only making a record of the contact pattern between the writing utensil and the recording device, but also measuring and recording the speed and/or pressure applied during the writing process.

There are a number of drawbacks with conventional biometric-based systems. For example, some hand recognition systems can require large, expensive scanners and expose individuals to health risks. Signature recognition systems can be susceptible to errors based on variations in an individual's behavior. Voice recognition systems have difficulty when a user has a cold and can be fooled by digital recordings. Retinal scans generally require expensive high-resolution, proprietary camera equipment and ideal lighting conditions. Moreover, many users may not be comfortable allowing a bright light to shine into their eyes. Retinal devices also generally require users to place their eyes close to or in contact with a scanning device, thus exposing the users to potential infections or other health risks. Furthermore, iris-recognition cameras generally require a significant amount of coordination for users to position their eyes properly for scanning and even small deviations can negatively affect the test results. Heavy make-up, facial hair, and poor lighting conditions can present difficulties for two-dimensional facial recognition systems, while cosmetic surgery can present difficulties for three-dimensional face recognition systems.

Still another drawback with many conventional systems is that searching large databases of biometric images can require substantial amounts of processing power, as well as causing a number of so-called "one to many" searches. More specifically, some types of biometrics technologies can produce high numbers of false positives when the database size is very large. Large numbers of false positives, for example, can occur with large databases of facial images that are used with facial recognition systems because the systems are configured to simply match pixels between a photo and a digital photo taken on-site to verify an individual's identity.

### BRIEF DESCRIPTION OF THE DRAWINGS

Figure 1 is a schematic illustration of a biometric-based identity verification system configured in accordance an embodiment of the invention.

Figure 2 is a partially schematic display diagram of a method for generating an audio recording portion of an individual's MBDS template in accordance with an embodiment of the invention.

Figures 3-5 are partially schematic isometric views of grids illustrating the three-dimensional nature of a MBDS template having an audio input and multiple video inputs captured synchronously over a selected time period.

Figures 6-8 are flow diagrams illustrating methods for using the biometric-based system of Figure 1 to control access to secure areas and/or secure systems in accordance with various embodiments of the invention.

Figure 9 is a display diagram of a voice spectrograph configured in accordance with another embodiment of the invention.

### DETAILED DESCRIPTION

### A. General Overview

The following disclosure relates generally to biometric-based systems and corresponding methods for identity verification. Embodiments of the invention, for example, include systems and methods for creating a unique biometric template (e.g., a multi-biometric data series (MBDS) template) having a particular combination of biometric data that can be widely utilized for personal identification and security verification. As used herein, an MBDS template or biometric template includes an individual's voice audio input captured synchronously and correlated with multiple video inputs over a selected time period (e.g., the time it takes an individual to state his or her name into a microphone and video camera). Voice recognition biometric data markers, when correlated with corresponding face recognition data markers, create a three-dimensional biometric template that has unique linear relationships between visual and vocal performance and, accordingly, can assist in positively identifying a particular individual.

The large number of unique biometric markers in each MBDS template can significantly improve the accuracy of personal identity verification as compared with conventional biometric systems that rely on a single or small number of unique markers. Additionally, the disclosed systems including MBDS templates can provide a significant decrease in statistical probability error as compared with many conventional systems. The number of data markers is inversely related to the verification error-as the number of markers increases, the potential error decreases. The low statistical probability of error associated with the disclosed systems is accordingly suitable for high security applications, as well as medium and low-security environments. Furthermore, verification errors can be reduced to the levels of other significantly more intrusive biometric-based security screening methods, such as iris or retinal scanning and time-consuming DNA analysis. Moreover, the disclosed systems require little or no physical contact and, therefore, present minimal health risk to the user.

Compared with conventional biometric-based systems that require expensive equipment and ideal testing conditions, embodiments of the invention can provide accurate results with less than ideal conditions and relatively inexpensive equipment. For example, low-resolution image recognition (unacceptable for iris or retina verification) can be combined with voice recognition to provide identification systems having a high degree of accuracy. Biometric features like eye-blinking, mouth position (i.e., open mouth, closed mouth, etc.), breathing patterns, and the timing associated with such behavioral habits provide unique data markers that can be tracked even with low-resolution video (e.g., bank machine kiosks or Web cams in which lighting may be less than ideal).

The biometric-based systems and methods described below can be used to control access to secure areas and various types of secure electronic devices and systems. For example, the disclosed systems and methods can prevent unauthorized access into secure areas such as airports, train stations, bus and ship terminals, public and private buildings, shopping complexes, and other desired areas. The biometric systems can also be used to prevent unauthorized access to a wide variety of electronic systems including, but not limited to, computer network systems, Web-based systems, automated transaction mechanisms, cellular phones, personal digital assistants, banking systems, and the like. The various biometric-based systems and methods can also be used to validate a number of different types of self-authenticating documents (e.g., passports, visas, etc.) that include machine-readable components for storing an individual's biometric data, electronic transmission systems (e.g., Internet, wireless, satellite, etc.), and other related systems. Furthermore, aspects of the invention can be used to help quickly identify potential public health risks and assist law enforcement and health officials in implementing necessary procedures (e.g., quarantines, etc.).

Aspects of the invention can be characterized in a number of different ways. For example, one aspect can include a synchronous measurement of both audio and video input where an individual takes one or more of the following actions to facilitate the authentication process-
(a) states his or her full legal name (or a portion thereof) in any order and using any initial or word combination to create a digital signature or template containing a unique combination of personal biometric data;
(b) states his or her legal name several times (and in generally the same way) to create baseline template data with acceptable standard deviation tolerance, thus permitting natural human behavior variation and reliable identity verification;
(c) states a secret password following his or her legal name to provide variable security requirements suitable for corporate or military applications;
(d) states the name of one or more small children accompanying the individual to accommodate family members traveling with young children and help prevent child trafficking and kidnapping;
(e) speaks out loud in a unique way to create a MBDS template represented by a three dimensional vector reference containing coordinates (x, y, z) for each data marker, with z representing time as measured by seconds or frame numbers;
(f) follows instructions (either verbal or written) to provide a verifiable recording of biometric markers that can be used to authenticate machine-readable personal identification and verify on-site personal identity; and/or
(g) follows instructions (either verbal or written) to provide a verifiable recording of biometric markers that can be used to verify on-site personal identity and permit access to, or maintain access to, on-line services provided by Internet, intranet, LAN, and/or other suitable electronic networking systems.

Another aspect of the invention can include a synchronous measurement of both audio and video input in which an individual-
(a) who experiences difficulty using a worn out machine readable device (e.g., a security pass, national ID card, driver's license, passport, RFID tag, or the like) can still provide biometric input for comparison with a database reference file to receive identity verification and receive low-level clearance to a secure area;
(b) who forgot, lost, or had his or her personal identification stolen can still provide biometric input for comparison with a database reference file to receive identity verification and limited access to an automated ticket kiosk or bank machine; and/or
(c) who failed an initial background check can resubmit biometric input with both eyes closed while near-field infrared illumination is used to create a three-dimensional wire-frame projection grid animation, blood-vessel face-map image, and/or voice spectrograph image that can be compared individually or in combination with corporate, government, and/or law enforcement databases to provide identity verification for the individual.

Still another aspect of invention can include using an individual's biometric data (including both audio and video data measured synchronously) to-
(a) combine face recognition markers (captured during the period of time that it takes a person to clearly state his or her legal name) with corresponding voice recognition markers (recorded simultaneously during the same event) to create a three-dimensional data map or template/vector that is unique to each individual and store the biometric template on a database, machine-readable device (e.g., passport, driver's license, staff ID, national ID card, credit or bank card, PDA, CD, DVD, RFID, microchip implant, etc.), or another suitable storage medium;
(b) verify personal identity and/or authenticate a machine-readable device containing the individual's biometric data by matching the individual's baseline three-dimensional data map or template/vector with on-site biometric data measurements;
(c) verify an individual's identity through analysis using face recognition and voice recognition technology;
(d) provide baseline template and standard deviation records that are stored on at least one private security, corporate, government, military, or public law enforcement database;
(e) verify an individual's identity against at least one law enforcement or private security database; and/or
(f) verify a machine-readable device's authenticity against at least one law enforcement or private security database.

Yet another aspect of invention can include-
(a) updating an individual's reference file of previous biometric template/vector recordings (e.g., using old driver's license photos) to create a stronger baseline template and provide acceptable standard deviation tolerance parameters that can accommodate natural variations in human behavior and appearance;
(b) updating an individuals reference file of previous biometric template/vector recordings to create acceptable standard deviation parameters so that the symptoms of a common cold (e.g., sore throat, itchy eyes, runny nose, etc.) will not negatively affect identity verification; and/or
(c) updating an individual's reference file of previous biometric template/vector recordings to create acceptable standard deviation tolerance parameters so that alterations in visual appearance (e.g., a beard or mustache) will not significantly interfere with identity verification and other systems (e.g., infrared video face recognition and voice recognition) can take priority over color video face recognition during the verification analysis.

Still another aspect of invention can include using an individual's biometric data (including both audio and video data measured synchronously) to-
(a) verify data stored on an individual's machine-readable device (e.g., passport, driver's license, staff ID, national ID card, credit or bank card, PDA, CD, DVD, RFID, microchip implant, etc.) by matching (1) the device's stored biometric data with (2) on-site biometric data and, optionally, matching one or both of (1) and (2) with biometric data stored on a corporate, government, law enforcement, or military database;
(b) authenticate a physical key or portable communication device (e.g., cellular phone, PDA, etc.) and, upon positive identification, provide secure access to a computer network, Internet, database, Web site, or other types of electronic systems;
(c) purchase, issue, and/or validate an electronic ticket, voucher, debit card, or other type of financial instrument;
(d) permit secure financial, e-money, or other types of commercial transactions from a remote terminal; and/or
(e) permit low-level security clearance (e.g., limited access, entrance, or cash withdrawal in the event that the individual's machine-readable device is forgotten, lost, stolen or unavailable due to some unforeseen circumstance or unexpected emergency.

Still yet another aspect of the invention can include using an individual's biometric data (including both audio and video data measured synchronously) to control access to secure areas such as-
(a) schools or public gathering areas such as sports arenas, bus, train, or subway station/terminals, shopping complexes, domestic or international airports, military or civilian government areas, international borders, and transit facilities in between any of the above mentioned locations;
(b) automated banking machines, e-ticket kiosks, network terminals to educational, corporate, or military networks, and/or secure financial networks; and/or
(c) existing law enforcement infrastructure and associated facilities containing databases of personal identification, such as photographs, fingerprints, health records, or the like.

Further aspects of the invention be directed to the advantages associated with using multiple biometric data (such as the MBDS template) to positively identify an individual. Such advantages can include-
(a) the color video data benefits from face recognition technology to improve verification accuracy;
(b) the black & white video data benefits from face recognition technology to improve verification accuracy;
(c) passive infrared data benefits from technology to determine that a live person is presenting the secure biometric data to prevent fraud;
(d) passive infrared data benefits from technology to determine a possible health risk like SARS or Asian Bird Flu;
(e) near-field infrared illumination revealing surface blood vessel pattern data benefits from technology to determine a possible health risk and provides a significantly greater number of biometric markers for high security applications;
(f) near-field infrared illumination revealing three-dimensional facial characteristics that can be mapped over time to create a computer graphic simulation provide a significantly greater number of biometric markers for high security applications;
(g) the audio data benefits from speech recognition technology to improve verification accuracy;
(h) the audio data benefits from audio analysis technology to create a voice spectrograph to improve verification accuracy; and/or
(i) the audio data benefits from noise reduction or noise cancellation technology to facilitate applications in public areas where background noise is present to improve verification accuracy.

As described in detail below, embodiments of the invention can be used in a number of different environments and can include a number of different advantages. In several embodiments, for example, the system can be used at security checkpoints to compare an individual's baseline biometric data stored on a suitable machine-readable device (e.g., driver's license) with on-site measurements and law enforcement databases. Mobile checkpoints can also make use of some or all of the elements available to provide on-site identity verification. State-of-the-art audiovisual technology now facilitates wide application of high-speed data transmission for timely identity verification and document authentication. For example, wide-field scanning technology (e.g., Bluetooth, RFID, etc.) could recognize the order of machine-readable identification reference file numbers for users queuing in front of a security checkpoint, automated kiosk, or bank machine, and request each user's reference files in advance to speed up on-site verification of the MBDS templates.

Any standardized security system should not only meet the high standards expected of it, but also offer significant advantages to the public. By way of example, when a drink spills on a machine-readable student ID card during lunch break, a student is still able to attend classes and gain temporary on-line computer access in order to complete assignments. Application for and receipt of a new student ID card in exchange for the damaged one could be easily accomplished without delay. When an old security pass expires, staff can still gain limited entrance to facilities, fill out a request form, and be quickly issued a new security pass. When a security ID card begins to wear out and can no longer be verified, an employee could still gain access to his or her office and Intranet by entering a MBDS template at security checkpoints. Important work could continue in a timely manner while a request for a replacement security ID card is processed.

In another embodiment, the system can provide the day-to-day convenience of bank machine transactions even when one's bank card is forgotten at home, left in another wallet or purse, or otherwise misplaced. By entering a MBDS template and receiving low-level security clearance, for example, a mother shopping at a mall would still be able to withdraw a limited amount of money from the nearest bank machine without the inconvenience of having to return home to retrieve her bankcard or credit card. Another advantage of the system is that it may facilitate widespread acceptance of its use in an international security system suitable for the USVisit program.

In the event of an emergency (e.g., valuables and/or identification are lost or stolen) cash withdrawal, car rental reservation, and/or transportation ticket purchases could still be accomplished following successful identity verification by entering a MBDS template and receiving low-level security clearance. Business travelers would not become stranded as the result of a misfortune. Additionally, credit card company notification to cancel a lost or stolen card, and 911 emergency assistance (either medical or law enforcement in nature) could become programmed options available at automated ticket kiosks and bank machines that form an integral part of a national security system.

The MBDS template system can also be an important feature in an e-cash system. For example, many mobile devices (e.g., cellular phones, PDAs, etc.) can be interoperable with IC credit/debit cards, ATMs, and the like. One such feature can allow a user to "charge up" the phone with credit and then use the phone as a credit/debit instrument in financial transactions. In several applications, a credit/debit phone can be combined with the above-described MBDS template system and the resulting device could be configured to accept a user's MBDS input for verification before e-commerce features are activated or transactions take place. In the event the device was lost or stolen, it could not be used by anyone other than the owner. In other applications, the device could be used in a high volume transit system to allow passengers to pay fares without requiring the passengers to carry tokens or passes. Newer technologies like Bluetooth and WiFi allow a wider field of activation and could provide significant monitoring advantages in identity verification. In still further applications, credit/debit phones can be combined with the MBDS template system to perform a variety of other functions.

In one embodiment, automated kiosks can provide automated responses to assist the user. Another embodiment may include face-to-face communication with service personnel using the audio and video capabilities of the system. A company representative can review an unverifiable biometric input and explain directly to the user what the problem seems to be and suggest ways to improve the MBDS template recording (e.g., speaking louder, standing closer to the machine, not turning one's head to the side, etc.)

Another advantage of the features described herein is flexibility. In times of peace, for example, low-security requirements would facilitate normal movement of trade and industry. Citizens would go about their daily business knowing that a secure environment had been created through the use of a safe, reliable system for personal identification. When necessary, however, the security level of the system could be quickly increased in a prioritized, systematic way, without undue inconvenience to the public to provide an effective and efficient system of personal identification and infectious disease monitoring. Furthermore, if a possible health risk is detected, an automated Notification of Poor Health Condition (NPHC) could be issued to the user and directions to the nearest hospital or medical clinic open at that particular time of day or night could be provided.

Yet another advantage of the systems described herein is the ability of a user (even without a machine-readable device) to verify his or her personal identity and gain low-level security clearance by comparing a MBDS template recorded on-site with a MBDS template stored on file with a corporate, government, and/or law enforcement database. Although fast verification speed with a machine-readable device is generally desirable (due to the assistance provided by reference number or alphabetical search methods), the disclosed security systems can still provide identity verification without such a device. In some instances, the verification processes may take longer because the process requires more time for searching through various databases.

Still another advantage of the system is that secure Internet access can be accomplished without an ID card and can generally only require transmission of an individual's MBDS template data. An electronic authorization key or USB dongle is optional for users of secure financial systems.

Currently, many automated bank machines offer only a service telephone. In another embodiment of the system, an automated kiosk employing the MBDS template technology could provide face-to-face video conferencing with financial administrators at bank machines, sales representatives at ticket kiosks, emergency 911 operators, police, medical personnel, or the like.

In still another embodiment of the system, car rental might be refused after infrared video data and comparisons with healthy baseline data reveals significant physical changes to one's health (e.g., slurred speech or other symptoms of intoxication).

The MBDS template also provides an effective method of monitoring public health risks when incorporated into automated cash machines and entrances to public facilities. For example, the system could be configured to screen users for possible health risks like SARS or Asian Bird Flu through the use of passive and/or active infrared technology that measures body temperature. Elevated body temperature can be apparent in a person's face regardless of the ambient air temperature. This feature could help screen individuals for infectious disease like SARS, Asian Bird Flu, and the like, and prevent screened individuals from purchasing a passenger ticket for mass transit or entering pubic areas, thus helping control the spread of a contagion.

Low-level security applications might focus primarily on personal identification authentication and therefore not require the additional time required for verification with databases. Normal entrance to secure areas could be accomplished quickly by instantly verifying on-site MBDS template data and the template stored on a machine-readable device designed for identification, such as a company security pass or key card. For example, an employee who forgets his security ID pass would still be able to enter low-security areas by simply waiting a bit longer at the security checkpoint, while his MBDS template is verified against company databases.

Another advantage of the MBDS template system is flexible integration into everyday activities. For example, a mother could hold her child in her arms so that the child is visible in the wide angle camera view and then simply state the child's name following her own (e.g., "Jane Smith and John Jr."). This would make up an additional file stored on her machine-readable identification at the time it was issued. For example, a national ID card might contain such an additional file for the mother and all of her children individually. This would allow her to identify herself and one or more young children traveling with her.

Programs are now in place in the United States to encourage implanting microchips in children, to facilitate quickly locating them in case they become lost in a large shopping mall or suddenly go missing. While this may initially cause concern among some, others may choose to try and protect their children by increasing the surveillance tracking capability afforded by this new technology, especially in high crime areas. One of the first things a young child learns to say is his or her name and, accordingly, the disclosed systems may be suitable for use with student ID cards, RFID devices, and/or implantable microchip devices.

By way of example, each child participating in a school field trip to the zoo may be issued some form of machine-readable device (e.g., a student RFID in the form of a reusable wristband and including watch to facilitate prearranged meeting times). The device could also contain a microchip with the student's personal MBDS template file. The zoo could employ a low-level security system with high-speed verification to permit high volume visitor traffic. In this way, a teacher could monitor movement of students on a wireless handheld device similar to a PDA and be notified if one or more children attempt to leave the secure area.

The following description provides specific details for a thorough understanding of various embodiments of the invention. One skilled in the art will understand, however, that the invention may be practiced without many of these details.
Additionally, some well-known structures or functions may not be shown or described in detail, so as to avoid unnecessarily obscuring the relevant description of the various embodiments.

The terminology used in the description presented below is intended to be interpreted in its broadest reasonable manner, even though it is being used in conjunction with a detailed description of certain specific embodiments of the invention. Certain terms may even be emphasized below; however, any terminology intended to be interpreted in any restricted manner will be overtly and specifically defined as such in this Detailed Description section.

Although not required, aspects and embodiments of the invention will be described in the general context of computer-executable instructions, such as routines executed by a general-purpose computer, e.g., a server or personal computer. Those skilled in the relevant art will appreciate that the invention can be practiced with other computer system configurations, including Internet appliances, hand-held devices, wearable computers, cellular or mobile phones, multi-processor systems, microprocessor-based or programmable consumer electronics, set-top boxes, network PCs, minicomputers, mainframe computers and the like. The invention can be embodied in a special purpose computer or data processor that is specifically programmed, configured or constructed to perform one or more of the computer-executable instructions explained in detail below. Indeed, the term "computer," as used generally herein, refers to any of the above devices, as well as any data processor.

The invention can also be practiced in distributed computing environments, where tasks or modules are performed by remote processing devices, which are linked through a communications network, such as a Local Area Network ("LAN"), Wide Area Network ("WAN") or the Internet. In a distributed computing environment, program modules or sub-routines may be located in both local and remote memory storage devices. Aspects of the invention described below may be stored or distributed on computer-readable media, including magnetic and optically readable and removable computer discs, stored as firmware in chips (e.g., EEPROM chips), as well as distributed electronically over the Internet or over other networks (including wireless networks). Those skilled in the relevant art will recognize that portions of the invention may reside on a server computer, while corresponding portions reside on a client computer. Data structures and transmission of data particular to aspects of the invention are also encompassed within the scope of the invention.

As used in this application, the terms "module" or "component" are intended to refer to a computer-related entity, either hardware, a combination of hardware and software, software, or software in execution, data processing or data storage and retrieval. For example, a module or component may be, but are not limited to being, a process running on a processor, a processor, an object, an executable, a thread of execution, a program, raw or processed digital data, a data template and a computer. By way of illustration, both an application running on a server, the data within the application and the server can be considered a module or component.

### B. Embodiments of Biometric-Based Identity Verification Systems and Methods for Using Such Systems

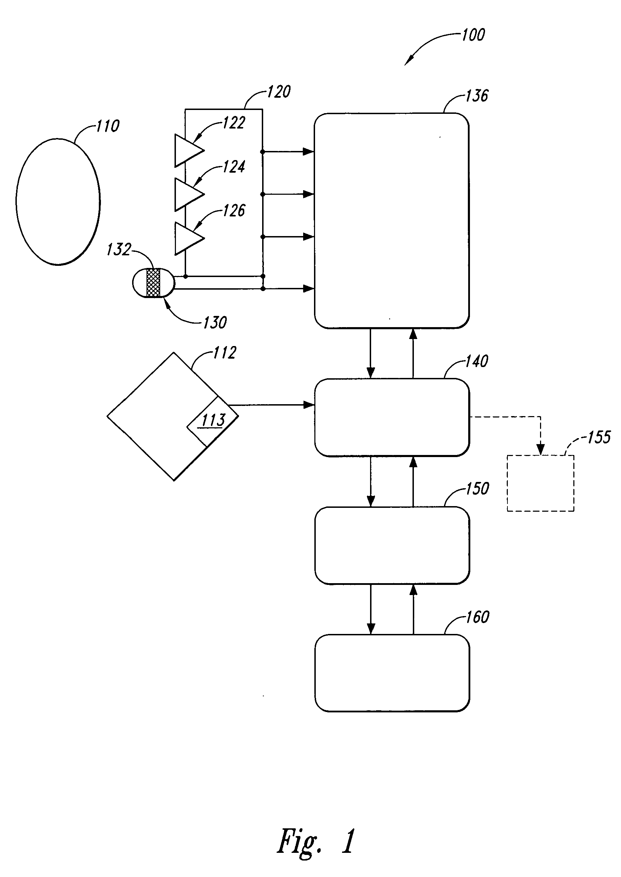

Figure 1 is a schematic illustration of a biometric-based identity verification system 100 configured in accordance an embodiment of the invention. The system 100 can be used, for example, to control access to secure facilities or areas (e.g., transportation terminals, office buildings, government buildings, financial institutions, international borders, schools, sports arenas, etc.) or control activation of electronic systems (e.g., computer systems, ATMs, e-ticket kiosks, cellular systems, financial networks, communication systems, transportation systems, etc.). In still other embodiments, the system 100 can be configured to control access to different types of secure areas and/or secure systems. Although the below-described systems generally include only biometric-based characteristics as inputs, in other embodiments non-biometric based data can be used in conjunction with the biometric-based inputs to control access.

To begin the verification process, an individual 110 approaches the system 100 and presents a personal identification card 112 ("ID card 112"). The ID card 112 can include a driver's license, passport, national ID card, security pass, passbook, bank book, credit or bank card, PDA, CD, DVD, RFID, microchip implant, electronic ticket, or the like that includes machine-readable data 113 (e.g., the individuals biometric data). The data 113 from the ID card 112 can be input into a local security component 140 for verification using a number of different known input methods (e.g., card reader, barcode scanner, RFID, Bluetooth, etc). In embodiments where the individual's ID card 112 does not include machine-readable data 113, the desired information from the ID card 112 can be manually input into the local security component 140. In still other embodiments, the system 100 can be used to verify the individual's identity without the use of the ID card 112.

Either before or after presenting the ID card 112, the individual 110 can provide biometric input to a video input module 120 and an audio input module 130. The video input module 120 can include one or more sensors (three are shown) configured to capture image and video data from the individual 110. In the illustrated embodiment, for example, a first sensor 122 captures color video data, a second sensor 124 captures black & white video data, and a third sensor 126 captures infrared video data of the individual. The video data can include a number of different formats (e.g., NTSC, PAL, MPEG(2, 3, 4), SECAM, M-PAL, N-PAL, MESECAM, etc.). The sensors 122/124/126 can be part of the same digital camera or each sensor may be part of a different camera. In still other embodiments, the digital imaging unit 120 can include a different number of sensors to capture video data from the individual 110.

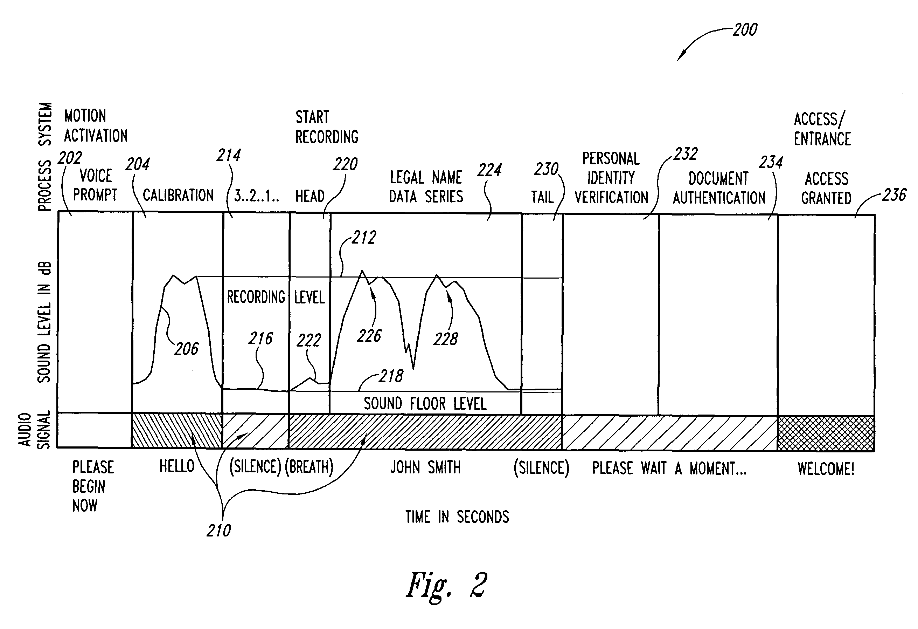

The audio input module 130 can include a microphone 132 or other suitable recording device configured to capture and process audio input from the individual 110. The audio data can include a number of different formats (e.g., WAV, AIFF, AU, WMA, Apple Lossless, MP3, AAC, etc.) As explained in greater detail below, the data from the three video sensors 122/124/126 and the data from the audio input module 130 is captured synchronously and combined to create a MBDS template 136 that includes at least four unique biometric data markers to verify and authenticate the individual's identity. Further details of the MBDS template 136 are described in greater detail below with respect to Figures 2-5.

The generated MBDS template 136 can be sent to the local security component 140 for processing and comparison with the data 113 from the individual's ID card 112. The MBDS template 136 can also be sent to one or more additional on-site and/or off-site systems for processing and verification. In the illustrated embodiment, for example, the MBDS template 136 can be sent to an off-site security component 150 and one or more corporate, government, and/or law enforcement databases 160 (e.g., FBI, Homeland Security, INS, local police, etc.) for additional verification. In this way, the individual's MBDS template 136 can be checked against a number of different known sources to further authenticate the individual's identity and confirm that the individual should be given access to the secure area or system. In embodiments where the system 100 is installed at an airport, the MBDS template 136 may optionally be sent to an airport security system 155 (shown in broken lines) for additional clearances (e.g., security checkpoint clearance, boarding gate clearance, no-fly lists, etc.) In other embodiments, the system 100 can include a different number of security components to verify the individual's MBDS template 136 and/or the MBDS template 136 can be compared with different types of databases.

If the individual's identity verification is successful and no security alerts appear after the MBDS template 136 is checked against the various databases, then local security component 140 provides an authorization message or alert to the individual 110 and the individual can gain entry to the secure area and/or access to the secure system.

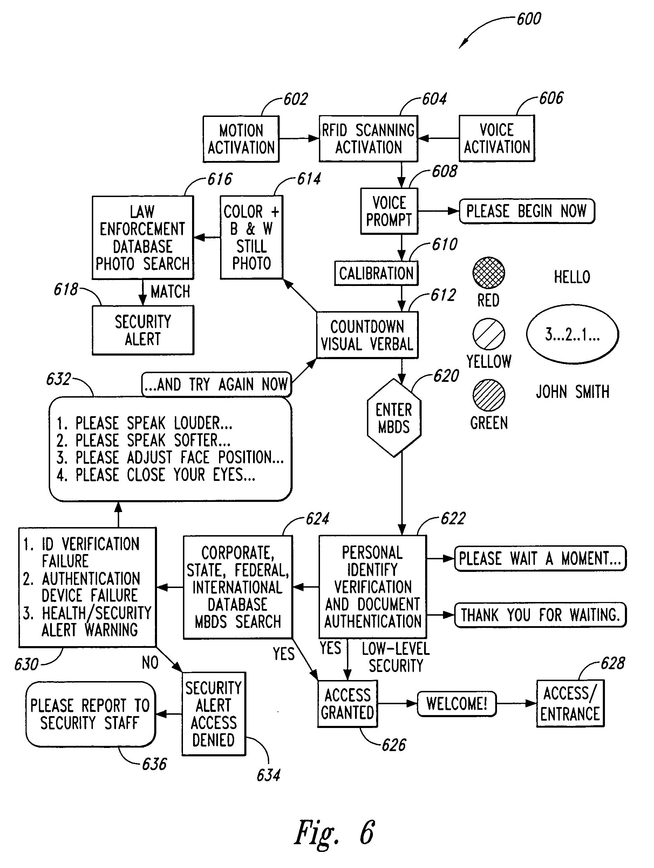

By way of an example, if the system 100 is installed at an automated banking kiosk, a person desiring access to the kiosk approaches the kiosk and presents a personal identification card including machine-readable data (e.g., a credit card, bank debit card, or bank book). The person is then scanned by the digital video input 120 while he or she speaks into the digital audio input 130. The digital video and audio data are combined to create the person's MBDS template 136. The newly-created MBDS template 136 is compared against the person's MBDS template previously on record and, if the templates match, the person is authenticated. After authentication, the person can perform various banking functions, such as making a deposit, transferring money between accounts, withdrawing cash, etc. Figures 6-8 provide further details of methods for using the system 100 to control access to secure areas and/or secure systems.

Figure 2 is a partially schematic display diagram of a method 200 for generating an audio recording portion of an individual's MBDS template in accordance with an embodiment of the invention. The method 200 can be used, for example, with the audio input module 130 of the system 100 described above to record and process audio input from the individual 110. In other embodiments, however, the method 200 can be used with other suitable systems.

The method 200 begins during an initial period 202 with a voice prompt instructing a person wishing to gain access to a secure area or secure system to begin the process. The voice prompt, for example, can instruct the person to repeat a desired word or phrase into a microphone or other suitable recording device. The voice prompt can be activated automatically when the person moves into a specific area (i.e., motion activated), scans his or her ID card 112 (Figure 1), or takes another type of suitable action to activate the audio input process. In other embodiments, the audio input process can be activated by other suitable methods such as textual prompts or instructions to guide the person rather than voice prompts.

During a next period 204, the person provides a voice sample to calibrate the recording device. In the illustrated embodiment, for example, the person provides a first voice input 206 (e.g., "Hello" or another short phrase) into the microphone and a status signal 210 (e.g., a red light or other suitable visual or audio signal) indicates that the calibration process is in progress. The first voice input 206 provides a baseline voice signal level 212 for the audio recording process. If the calibration process is unsuccessful (i.e., the signal level 212 is outside of desired ranges), a voice (or text) prompt instructs the person to adjust his or her positioning (e.g., move closer to the camera/microphone unit, adjust face positioning, speak with a louder voice, etc.) and the calibration process described above starts again. If the calibration process fails several times (e.g., three attempts), the method 200 can proceed based on the average signal level 212 calculated from the two closest first voice input results. In other embodiments, however, the calibration process may be aborted altogether after two or more failures.

During period 214, the status signal 210 indicates (e.g., with a yellow light) that a sound floor calibration is in process. The sound floor calibration measures and averages background signal levels 216 to create a sound floor level 218. The sound floor level 218 can be subtracted from the person's recorded audio input to help isolate the person's natural voice. One advantage of the sound floor calibration process is that creating the sound floor level can improve the rate at which the verification process is completed because the resulting recorded audio will not have to undergo extensive post-processing to remove background noise. Another advantage of the sound floor calibration process is that on-site background noise samples can improve security by providing a fail-safe that rejects the use of pre-recorded audio input (without such background noise) that may be presented to gain false access. In other embodiments, a number of different noise cancellation processes could be used in addition to, or in lieu of, the above-described sound floor calibration process. Suitable noise reduction or noise cancellation technology is commercially available from BOSE®, Dolby®, DBX®, and/or THX®.

The method 200 continues at period 220 where the status signal 210 indicates (e.g., with a green light) the start or "head" of the MBDS template recording. At the "head," an inhalation breath 222 typically occurs prior to the beginning of speech. The inhalation breath 222 (combined with corresponding face recognition and voice recognition markers) can form a unique biometric characteristic for the person under test. This particular characteristic, for example, can be used to index the person's resulting MBDS template within a database and help facilitate rapid searching of the database for the stored information.

The recording process continues at period 224 with the person providing a second voice input 226 (e.g., his or her given name) and a third voice input 228 (e.g., his or her family name) into the microphone. In the illustrated embodiment, for example, the person states "John" (i.e., the second voice input 226) and "Smith" (i.e., the third voice input 228) and each input is recorded. In other embodiments, the second and third voice inputs 226 and 228 can include different words/phrases and/or the recording process can include a different number of voice inputs. At period 230, the end or "tail" of the recording process (much like the "head") can be used to index the person's resulting MBDS template within a particular database. For example, the person may exhale, blink, or exhibit some other unique biometric characteristic after stating his or her name. These visual characteristics (in conjunction with the recorded audio input) can be used to index the person's MBDS template.

A frequent difficulty encountered with large database searches is distinguishing between individuals with the same or similar names. As such, the method 200 can include a number of features to help distinguish individual audio inputs. In one embodiment, for example, the process includes a five second recording window for the person to provide the second and third voice inputs 226 and 228 (along with video input recording about 150 frames at approximately 30 frames per second with standard digital video, or about 50-75 frames at about 10-15 frames per second via a Web cam). The five-second recording window allows the person enough time to state his or her full legal name and then, optionally, add a secret code word or another key word. Furthermore, systems incorporating the MBDS template could examine the head and tail section separately (when necessary) to help distinguish between individuals with the same or similar names, and rank them in order from most to least statistically probable before a direct comparison of the principal MBDS template is undertaken. Such features can improve searching efficiency and reduce false-positive and false-negative errors.

As discussed previously, the beginning or "head" of the recording generally includes an open mouth and silent breath before speech begins, and the end or "tail" generally includes a closed mouth, silent pause, and/or a blink of the eyes to relieve stress upon completion of the recording. Accordingly, in several embodiments the person's MBDS template can also include frame numbers corresponding with significant changes in biometric data markers that can be used to improve verification accuracy. For example, an individual's MBDS template could include the following notations: (frame 10, mouth open), (frame 30, speech begins), (frame 120, speech ends), (frame 130, mouth closed), (frame 140, eyes closed) (blink), (frame 145, eyes open). In other embodiments, however, the MBDS template can include different notations or the template may not include any notations.

The recorded audio input obtained during periods 220, 224, and 230 can then be processed and become part of the person's unique MBDS template 136 (Figure 1). At periods 232 and 234, the personal identity verification process and the document authentication process, respectively, can proceed with the person's recorded audio input (along with other visual and/or audio biometric markers) being compared against one or more previously-recorded biometric inputs. If verification is successful, at period 236 the person will be allowed access to the secure area and/or secure system. If the verification process is unsuccessful, however, the method 200 can be repeated one or more additional times before the process is aborted. In several embodiments, technical support can be provided (either via a live person or pre-recorded instructions) to the person to help determine why the verification process failed (e.g., voice too quiet, bad positioning with respect to the microphone, physical damage to the person's ID card, etc.). Additionally, in some cases low security access can be possible following identity verification even in situations where the person does not have an ID card or the ID card is damaged.

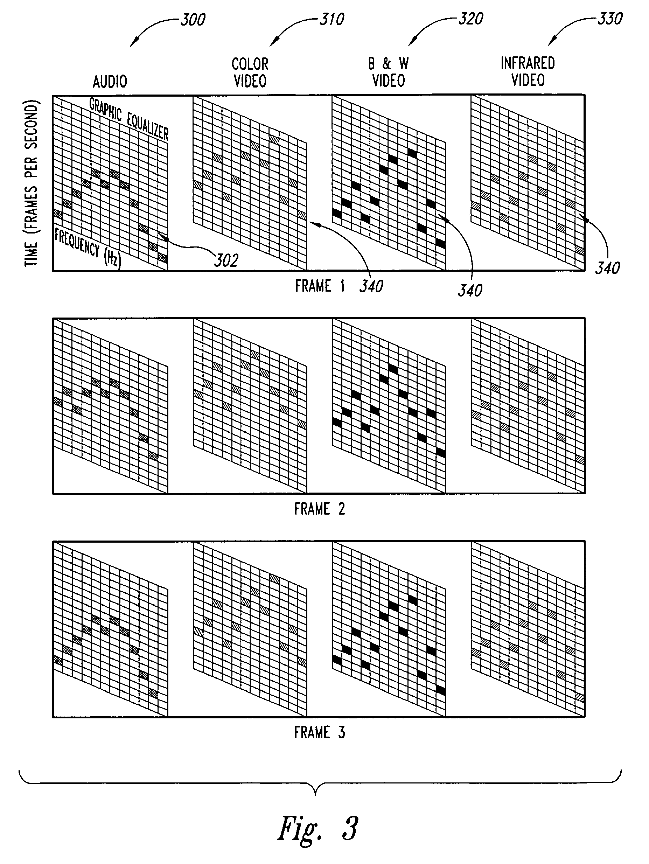

Figures 3-5 are partially schematic isometric views of grids illustrating the three-dimensional nature of a MBDS template having an audio input and multiple video inputs captured synchronously over a selected time period. The illustrated grids include audio data (as described above with respect to Figure 2) combined with video data from the video input module 120 (Figure 1). Figure 3, for example, is a display diagram illustrating three consecutive frames (Frames 1-3) including data from four different biometric data markers (e.g., audio, color video, black & white video, and infrared video inputs) that can be used to create an individual's MBDS template.

The first data marker 300, for example, can include audio input that has been recorded and processed (e.g., using voice recognition software that examines and measures tonal changes in speech audio) to measure the various frequencies that make up the recorded audio. The resulting data can be represented as data elements 302 recorded at peaks and troughs in sound level and frequency. In the illustrated embodiment, for example, the recorded audio input can be processed to form a graphical representation of sound frequency and volume. This audio measurement technique is familiar and widely used for graphic equalizer displays on consumer audio equipment with narrow frequency bands lined up side by side and illuminated to indicate their respective levels.

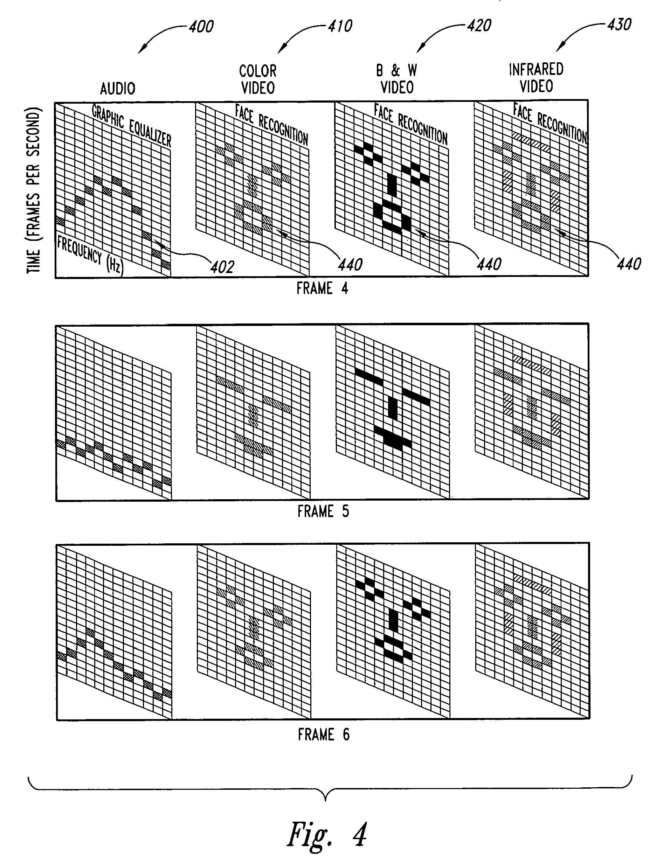

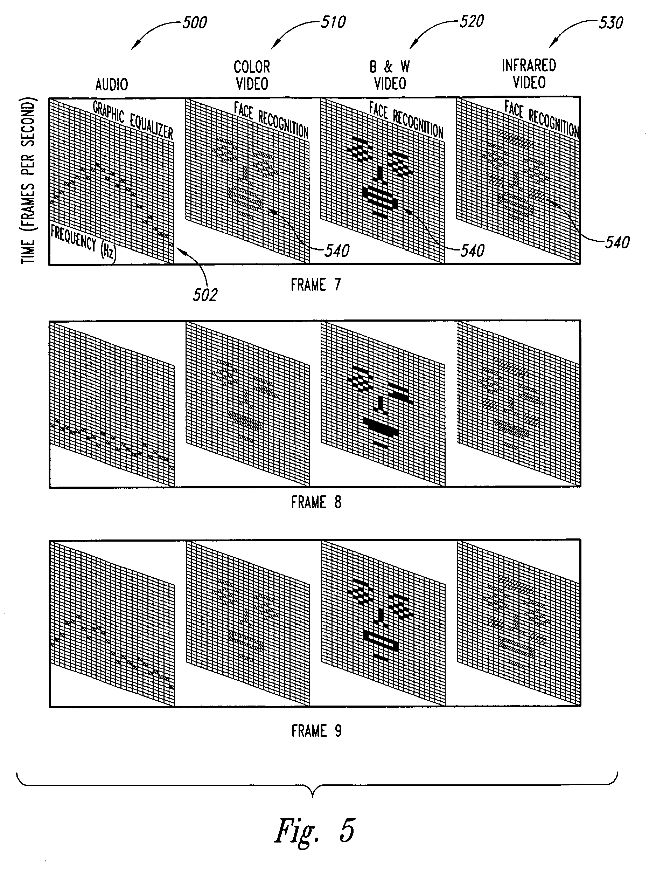

The most common vocal frequencies in human speech are generally between 100 Hz and 2,500 Hz. Accordingly, frequency measurements would generally focus in the range of the human voice to exclude as much background noise as possible. Low-security applications (such as the embodiment illustrated in Figure 3) can employ twelve divisions of 200 Hz each, with frequency and volume recorded for each frame of corresponding video data. These inflection points plotted against time can reveal unique speech patterns that can be recognized even when audio quality is low. In medium or high security applications (such as the embodiments illustrated in Figures 4 and 5), further processing may be required to divide the audio spectrum into a greater number of divisions for greater accuracy. In other embodiments, a different number of divisions could be used. In still further embodiments, noise cancellation technology and other suitable audio processing applications can be included to improve accuracy and/or processing speed.

The second data marker 310 can include the digital color video input (e.g., from the first sensor 122 of the video input module 120 of Figure 1), the third data marker 320 can include the black & white video input (e.g., from the second sensor 124 of the video input module 120), and the fourth data marker 330 can include the infrared video input (e.g., from the third sensor 126 of the video input module 120). The resulting video data can be represented as multiple video data elements 340 arranged in a pattern generally corresponding to the captured images. The second data marker 310 (i.e., color video data) can be used primarily for face recognition, focusing in particular on the eyes, nose, and mouth spatial relationship. The third data marker 320 (i.e., black & white video data) can be used to increase resolution and improve face recognition verification speed. The fourth data marker 330 (i.e., infrared video data) can be used to improve verification accuracy in low light or nighttime environments, as well as evaluating the color temperature of cheeks and forehead to confirm that a living person is present and screen for possible health related diseases such as SARS. In several embodiments, face recognition technology may be used to further process the video data.

The MBDS templates combine measurements of frequency(x), volume(y), and frame number(z), to create the three-dimensional data matrix that plots all data markers using (x, y, z) coordinates. By way of example, a high-speed wireless or Internet Web cam generally records video at about 15 frames per second. If 12 audio data markers are captured per frame of video over a period of 5 seconds, the resulting MBDS template includes about 900 data markers. Furthermore, if low-resolution face recognition software tracks a minimum of 16 data markers locating eyes, nose, and mouth in each frame of digital video, the resulting MBDS template would include approximately 2100 unique biometric data markers. As discussed previously, such MBDS templates accordingly include an exponential increase in data markers over conventional biometric systems and, therefore, provide extremely accurate identity verification along with a corresponding exponential decrease in verification error. Furthermore, by using (x, y, z) coordinates to represent all data markers, this resulting MBDS templates are relatively small electronic files (e.g., a compressed RTF file can be about 4 kilobytes), which allows the MBDS templates to be stored on a number of different storage devices and/or transmitted quickly via the Internet, wireless devices, cellular phones, PDAs, etc. An advantage of this feature is that it can significantly improve verification speeds because the MBDS templates are small files that can be transferred quickly between on-site security components and off-site databases.

Figure 4 is a display diagram illustrating three consecutive frames (Frames 4-6) including data from the four biometric data markers (e.g., audio, color video, black & white video, and infrared video) that can be used to create an individual's MBDS template in accordance with another embodiment of the invention. The data markers in Figure 4 can be generally similar to the data markers described above with respect to Figure 3. The data markers in Figure 4 differ from those described above, however, in that the markers in Figure 4 include a larger number of data elements and, accordingly, can be used for applications requiring greater security. Frame 4, for example, illustrates a first data marker 400 (e.g., a full volume speech pattern) including multiple audio data elements 402 illustrating sound level and frequency (e.g., a full-volume speech pattern), and a second data marker 410, a third data marker 420, and a fourth data marker 430 including multiple video data elements 440 illustrating the person under test with his or her mouth and eyes open.

Frame 5 of Figure 4 illustrates a pause in speech (as demonstrated by the low sound level shown by the first data marker 400 and the person's blinking eyes shown in the second, third, and fourth data markers 410-430). This type of individual characteristic (i.e., the blinking) might occur naturally or could be incorporated intentionally by the person to create a unique template feature. In several embodiments, starting the MBDS template with one's mouth and eyes closed (as shown in Frame 5) can be a trigger (similar to a film's "timing slate") to activate face recognition software and thus improve verification speed.

Frame 6 of Figure 4 illustrates the beginning of speech with the person's mouth partially open (as shown in the second, third, and fourth data markers 410-430) and as indicated by the medium sound level of the first data marker 400. In several embodiments, this type of pattern may also be found randomly throughout each MBDS template and can provide a unique reference characteristic for the individual templates.

Figure 5 is a display diagram illustrating three consecutive frames (Frames 7-9) including the four biometric data markers (e.g., audio, color video, black & white video, and infrared video) that can be used to create an individual's MBDS template in accordance with still another embodiment of the invention. The data markers in Figure 5 differ from those described above with respect to Figures 3 and 4 in that the data markers include a significantly larger number of data elements and, accordingly, can be used for high-security applications. By increasing the number of data elements, the accuracy of the verification process can be improved while maintaining acceptable processing rates.

In one embodiment, for example, medium and/or high-level security verification processes can include 24 divisions of 100 Hz each, with frequency and volume recorded at 30 frames per second. Standard digital video (30 frames/second) x (24 audio data markers/frame) x (5 seconds) = 3,600 data markers. If standard resolution face recognition software tracks a minimum of 32 data markers locating eyes, nose and mouth in each frame of color digital video, approximately 4,800 markers would be recorded in an MBDS template, for a total of about 8,400 markers. If the black & white and infrared video inputs are combined as well, over 18,000 data markers would be contained in a single MBDS template with about 7,000 markers forming the head and tail sections of the recording and over 10,000 markers representing the main body of the MBDS template.

Frame 7, for example, illustrates an initial stage of the process showing a first data marker 500 (e.g., a full-volume speech pattern) including multiple audio data elements 502 and a second data marker 510, a third data marker 520, and a fourth data marker 530 including multiple video data elements 540 illustrating the person under test with his or her mouth and eyes open.

Frame 8 of Figure 5 illustrates a pause in the person's speech with a low sound level shown by the first data marker 500 and the person's single blinking eye shown in the second, third, and fourth data markers 510-530. This type of individual characteristic (i.e., blinking one eye) might occur naturally or could be incorporated intentionally by the person to create a unique template. For example, a person could start the recording process with his or her mouth and one (or both) eyes closed. In several embodiments, starting the MBDS template with one's mouth and one eye closed (as shown in Frame 8) can be a trigger (similar to a film's "timing slate") to activate face recognition software. Furthermore, an initial pause before beginning the recording process and the interval between blinking one's eyes and beginning to speak can provide a useful baseline measurement to reduce false positives. Moreover, the initial breath that is required before beginning to speak is also a unique biometric characteristic that can form the first "chapter" in the "table of contents" that make up an individual's MBDS template and may help speed up database comparison searches.

Figures 6-8 are flow diagrams illustrating methods for using the biometric-based systems described above with reference to Figures 1-5 control access to secure areas and/or secure systems in accordance with various embodiments of the invention. Figure 6, for example, is a flow diagram illustrating a method 600 for controlling access to secure areas in accordance with one embodiment of the invention. The method 600 can be used with the system 100 (Figure 1) to restrict access to a number of different types of secure areas (e.g., airports and other transportation terminals, public and private buildings, international borders, sports arenas, etc.) A typical security checkpoint, for example, can include a number of automated stations or kiosks that each include the system 100 to avoid congestion and allow greater movement of visitors, passengers, and/or or personnel. A number of partitions or other suitable dividers can be arranged between the individual stations to form a number of individual controlled areas, thus providing a degree of privacy and security between adjoining stations. In other embodiments, the stations can have a number of other arrangements relative to each other. In still other embodiments, the method 600 can be used to restrict access to a number of other types of secure areas. Furthermore, the method 600 can be used with other suitable systems in addition to, or in lieu of, the system 100.

In blocks 602, 604, and 606, the method begins with activation of the security system using any number of suitable activation methods (e.g., motion activation, RFID scanning activation by near-field scanning or wide-field scanning, voice activation, etc.). Upon activation, in block 608 a voice prompt instructs the person being identified (also referred to herein as the "user") to "Please begin now." In embodiments where the checkpoint is located at a transportation terminal, the voice prompts can also include instructions to the user regarding specific travel procedures, documents that need to be provided, etc. In block 610, a voice level calibration window (e.g., along with a corresponding visual signal, such as a red light) indicates that calibration is beginning and prompts the user to provide one or more spoken words (e.g., "Hello") so that the system can properly adjust the audio recording levels before the user begins the main audio input process.

In block 612, another visual signal (e.g., a yellow light) followed by an audio command (e.g., a recorded countdown, such as "3...2...1..." instructs the user that a sound floor calibration process is underway to create a sound floor level for the audio input. When the security checkpoint is used in medium and high-level security environments, the method 600 can include proceeding to block 614 and using this brief period of time where the user is facing the camera (generally with his or her mouth closed) to create a color and black & white "mug shot" photo or digital images. The captured images could then be forwarded to various law enforcement databases in block 616 for screening while the remaining steps of the identity verification process are completed. If any positive matches are found for the user during the database search, in block 618 a security alert can be issued for the user. One advantage of this feature is that it provides additional screening time for searching the databases because the other verification processes can proceed simultaneous with the searches. This can significantly reduce the amount of time required for verification of an individual user, while still providing an extensive and thorough search of relevant databases.

The method continues in block 620 with another visual signal (e.g., a green light) notifying the user that the recording process is beginning. The user can then state his or her name (e.g., "John Smith") or another phrase into a microphone or suitable recording device. In decision block 622, the method continues with verification of the user's identity and (if applicable) authentication of the user's documents based on the user's audio and visual inputs. As discussed in detail above with respect to Figures 3-5, for example, the user's audio input is correlated with a number of captured video images of the user to create a unique MBDS template for the user. The on-site MBDS template can be compared against one or more of the user's stored MBDS templates from the user's ID card and/or one or more external databases in block 624. If the information matches, the user's identity is verified.

In situations requiring only low-level security, on-site identity verification (where the user has an ID card including stored biometric information) could occur almost instantaneously and the method can proceed to block 626 where the system signals the user that verification was successful (e.g., provides the user with a verbal "Welcome" signal or another suitable signal) and the user is granted access to the secure area in block 628. In situations requiring medium or high-level security, however, a typical "Please wait a moment ..." verbal or written instruction can be provided to the user while the database search is conducted with corporate, government, and/or law enforcement databases. If the user's machine-readable ID card or device was successfully scanned at the initial stages of the method and the user's stored MBDS template was successfully retrieved from the card or device, then verification can proceed while the user is performing the other steps of the method and, accordingly, the verification process can be completed in a relatively short time.

If identity verification or device authentication failure occurs at decision block 622, the method continues in block 630 and reviews the failure to determine what went wrong. If the failure was due to problems with the audio or video inputs, for example, the method continues in block 632 with instructions to the user regarding adjustments to help correct the errors. The method then goes back to block 612 to begin the recording process again. In many cases, for example, speaking with a staff member can reassure users who are experiencing difficulties and/or adjusting to the new system and thereby help eliminate any such errors. Furthermore, in cases where the user's ID card or other machine-readable device is malfunctioning, the user can still be granted limited access to the secure area if the area is a low-security environment. If the process fails one or more additional times, the process can proceed to block 634 and a security alert can be issued and/or the user can be detained while security staff is summoned in block 636.

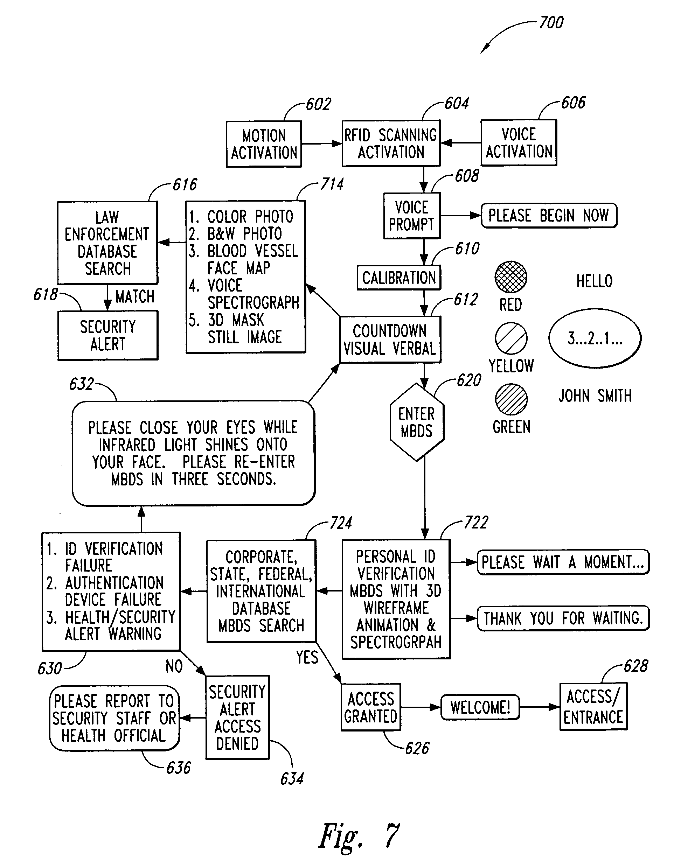

Figure 7 is a flow diagram illustrating a method 700 for controlling access to high-security areas in accordance with another embodiment of the invention. The method 700 can be generally similar to the method 600 described above. Accordingly, like reference numbers refer to similar features and/or processes in Figures 6 and 7. The method 700 differs from the method 600 in that a number of additional processes can be included (e.g., near-field infrared scanning of the user) to improve verification accuracy and screen users for potential public health risks.

For example, in block 714 the method 700 includes capturing not only the color and black & white images as described above with respect to method 600, but also including one or more additional biometric characteristics, such as a blood vessel face map (BVFM) created via infrared scanning, voice spectrograph data, and/or a three-dimensional mask image. In one embodiment, for example, a user's MBDS template could also include the user's voice spectrograph data, a BVFM, and a three-dimensional mask of the user. These additional biometric inputs could further improve the accuracy of the verification process and provide additional checks to help prevent fraud. For example, by increasing the number of audio and video data markers captured during the selected period of time (e.g., the five second window in which a user states his or her name), the verification accuracy of the MBDS template system can approach that of DNA testing without requiring intrusive tests and/or unreasonable delays. In other embodiments, a number of other biometric inputs can be used with the audio and video inputs.

In blocks 722 and 724, the method can include (in addition to the standard identity verification processes) checking the user's BVSM and/or three-dimensional mask against the user's previously-stored healthy baseline data to determine if the user poses a public health risk. In the event that a user is flagged for a possible health risk due to elevated facial temperature detected by passive infrared data, then one or more additional scans can be performed using the infrared sensor to confirm the health risk and provide the necessary information to facilitate rapid quarantine procedures. If analysis confirms that elevated facial skin temperature is symptomatic of a health-related concern (e.g., SARS), a security health alert can be issued in block 734 and the user can be denied access to the secure area while health guidance information is provided.

By way of example, a user who exhibits high body temperature when viewed by a passive infrared camera can be flagged as a possible health risk. Elevated skin temperature in the user's cheeks and forehead areas are generally a sign of illness because the body's defensive response generally includes elevated body temperature. On-site measurements (when compared with healthy baseline data) could provide early detection and confirmation of infectious disease like SARS or Asian Bird Flu. If a possible health risk is flagged or confirmed, a Notification of Poor Health Condition (NPHC) could be issued to the user and directions to the nearest hospital or medical clinic open at that particular time of day or night could be provided.

One advantage of the method 700 is that using such non-obtrusive methods to detect public health risks can isolate the risks at the earliest possible stage and provide the user with immediate communication with a health professional to dispense further. Furthermore, by recognizing that serious health risks are relatively rare occurrences, the invention can be configured to detect common health problems without causing undue inconvenience to the user. For example, a common cold or slight fever would not prevent the user from accessing the desired secure area, but an automated NPHC may still be issued to the user and the user could be given directions to the nearest hospital or medical clinic. A user suffering from flu symptoms or a high fever, however, may activate a health warning and, in some cases, be prevented from entering the secure area. Accordingly, monitoring user's health using the above-described systems and methods can represent the first line of defense in containment of many infectious diseases and help prevent an epidemic.

One feature of the above-described systems and corresponding methods is that verification accuracy can vary between different areas of a single installation, with different security requirements designed to minimize delay and inconvenience for users. By way of example, when the domestic terror alert is low, an airport security checkpoint can be configured to accept low-level security screening, with perhaps 95% verification (5% error) and requiring between about 2-5 seconds per person. At the airport entrance, a medium-level security checkpoint might accept 99% verification (1% error) with national law enforcement databases, requiring about 10-15 seconds per person while baggage is scanned. At the check-in counter, high-security might require 99.9% verification (0.1% error) and international background checks could take about 1-2 minutes while boarding passes and baggage tagging procedures are completed. Furthermore, extremely high-security environments including active infrared illumination biometric input could be employed to further increase verification accuracy (99.99% or 0.01% error) for air-traffic controllers and/or security staff.

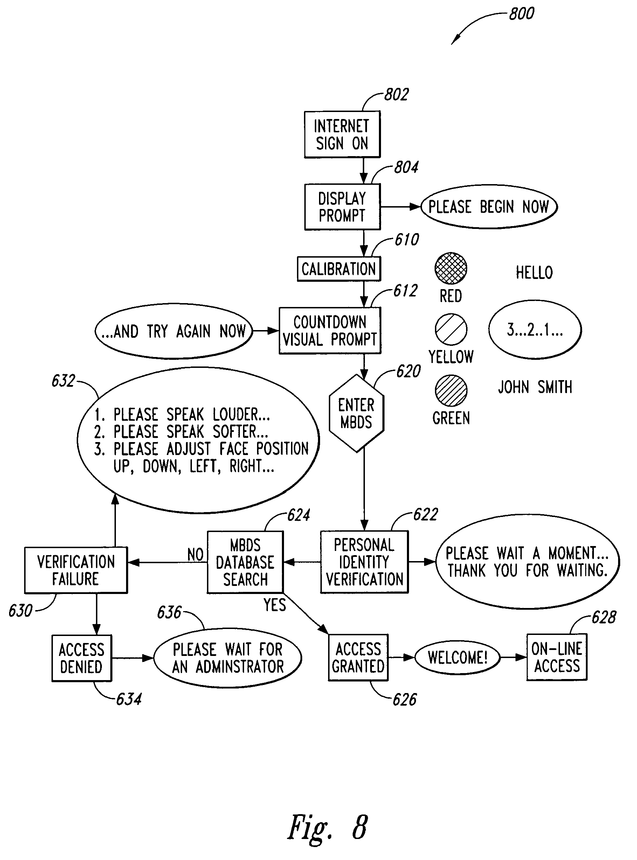

Figure 8 is a flow diagram illustrating a method 800 for controlling access to a secure electronic system (e.g., a computer network system, a cellular system, a Web-based system, a personal digital assistant, a credit/debit ATM mobile phone, a financial network, etc.) in accordance with still another embodiment of the invention. The method 800 can be generally similar to the method 600 described above with reference to Figure 6. Accordingly, like reference numbers refer to similar features and/or processes in Figures 6 and 8. In block 802, a user activates the system (e.g., logs on to the Internet) and at block 804 a display prompt instructs the user to begin the verification process (e.g., audio instructions such as "Please begin now" or suitable textual instructions). The next steps of the method 800 are generally similar to the methods described above with respect to the method 600 except that a user generally does not need to provide an ID card or other device including machine-readable data to gain access to the electronic system. When access is granted (at block 626), the user is authorized to use the system.

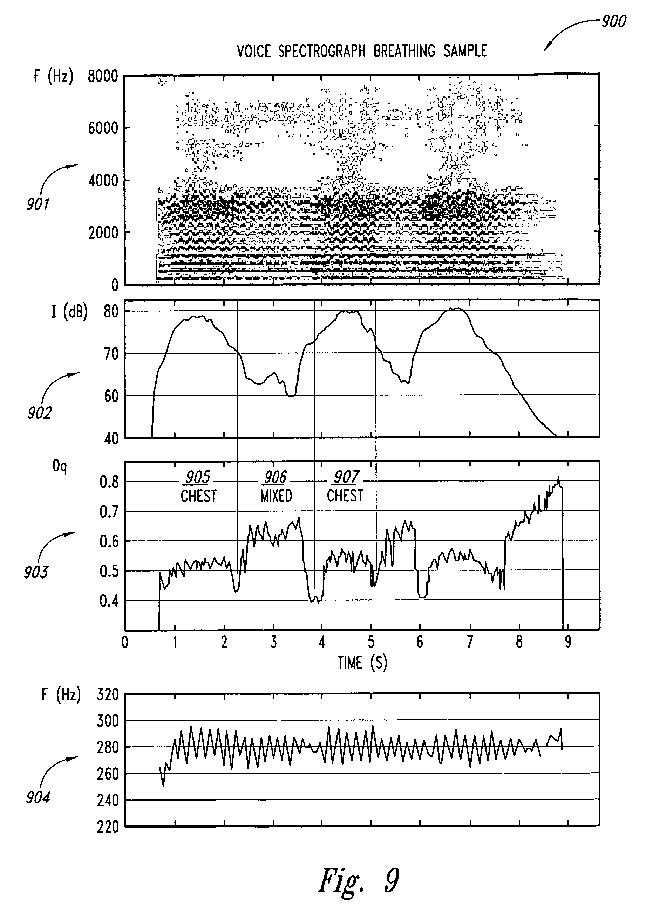

Figure 9 is a display diagram of a voice spectrograph 900 configured in accordance with another embodiment of the invention. In the illustrated embodiment, for example, a person under test alternated breathing deeply with his or her chest 905 before exhaling, then breathed in again with his or her nose and chest 906 mixed before exhaling, then finally breathed deeply again using only the chest 907. The spectrograph 900 can include up to four different elements of measurement (e.g., elements 901, 902, 903 and 904), with each element representing a distinct characteristic helpful in identification. Voice analysis technology can create a sound spectrograph image for the MBDS template, thus graphically representing the audio portion of the template by measuring frequency and intensity (volume) over time. In this way, voice spectrograph data may help replace fingerprints as a less intrusive and generally more accurate biometric identification system.

### Conclusion

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The above detailed description of embodiments of the invention is not intended to be exhaustive or to limit the invention to the precise form disclosed above. While specific embodiments of, and examples for, the invention are described above for illustrative purposes, various equivalent modifications are possible within the scope of the invention, as those skilled in the relevant art will recognize. For example, while processes or blocks are presented in a given order, alternative embodiments may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, or may be performed at different times.

The teachings of the invention provided herein can be applied to other systems, not necessarily the system described above. The elements and acts of the various embodiments described above can be combined to provide further embodiments.

Any patents and applications and other references noted above, including any that may be listed in accompanying filing papers, are incorporated herein by reference. Aspects of the invention can be modified, if necessary, to employ the systems, functions, and concepts of the various references described above to provide yet further embodiments of the invention.

These and other changes can be made to the invention in light of the above Detailed Description. While the above description describes certain embodiments of the invention, and describes the best mode contemplated, no matter how detailed the above appears in text, the invention can be practiced in many ways. Details of the data collection and processing system may vary considerably in its implementation details, while still being encompassed by the invention disclosed herein. As noted above, particular terminology used when describing certain features or aspects of the invention should not be taken to imply that the terminology is being redefined herein to be restricted to any specific characteristics, features, or aspects of the invention with which that terminology is associated. In general, the terms used in the following claims should not be construed to limit the invention to the specific embodiments disclosed in the specification, unless the above Detailed Description section explicitly defines such terms. Accordingly, the actual scope of the invention encompasses not only the disclosed embodiments, but also all equivalent ways of practicing or implementing the invention under the claims.

While certain aspects of the invention are presented below in certain claim forms, the inventors contemplate the various aspects of the invention in any number of claim forms. For example, a number of aspects of the invention may be embodied in a computer-readable medium. Accordingly, the inventors reserve the right to add additional claims after filing the application to pursue such additional claim forms for other aspects of the invention.

## Claims

1. A biometric-based security system, comprising:
an audio input module configured to receive and digitize a spoken utterance from a person;
a video input module configured to receive multiple digital images of at least a portion of the person at least approximately contemporaneously with receiving the spoken utterance from the person;
a first data processing module configured to receive the digitized spoken utterance and digital images of the person and correlate them together to form a biometric template for the person;
a memory storing prerecorded audio and video data as individual templates of individual people; and
a second data processing module configured to receive the biometric template and compare it for a match with one of the stored templates of audio and video data.

2. The security system of claim 1, further comprising a personal identification document having a memory for storing prerecorded audio and video data of the owner of the document as a personal document template, and wherein the second data processing module receives the personal document template from the personal identification document and compares it for a match with the person's biometric template and/or one of the stored templates of audio and video data to authenticate the personal identification document.

3. The security system of claim 2 wherein the personal identification document includes a driver's license, passport, national ID card, security pass, passbook, bank book, credit or bank card, PDA, CD, DVD, RFID, and/or microchip implant.

4. The security system of claim 1 wherein the video input module includes a color video sensor, a black & white video sensor, and an infrared video sensor.

5. The security system of claim 4 wherein:
the color video sensor is configured to capture one or more digital images of the person's face;
the black & white video sensor is configured to capture one or more digital image of the person's face; and
the infrared video sensor is configured to capture one or more digital images of the person's skin surface blood vessels and/or skin temperature.

6. The security system of claim 4 wherein the infrared video sensor is configured to capture one or more digital images of the person's face to create a blood vessel face map and/or a three-dimensional mask image of the person's face.

7. The security system of claim 1 wherein:
the multiple digital images of a person include a digital image of skin surface blood vessels and/or skin temperature;
at least some of the individual templates of prerecorded audio and video data stored on the memory include a baseline digital image of skin surface blood vessels and/or skin temperature; and
the second data processing module is further configured to compare the baseline digital images of skin surface blood vessels and/or skin temperature with the person's skin surface blood vessels and/or skin temperature.

8. The security system of claim 1 wherein the biometric template includes a three-dimensional vector with the digitized spoken utterance and multiple digital images.

9. The security system of claim 1 wherein:
the audio input module receives multiple audio data markers during a security session;
the video input module receives multiple frames of video during the security session; and
the first processing module accumulates the multiple audio data markers and multiple frames of video and correlates them together to form the biometric template.

10. The security system of claim 1 wherein the system is a self-contained unit installed on a portable electronic device, and wherein the system is configured to control access to the portable device.

11. The security system of claim 1 wherein the system is a self-contained unit installed at a security checkpoint and configured to control access to a secure area.

12. A biometric-based security system, comprising:
audio input means for receiving and digitizing a spoken utterance from a person;
video input means for receiving multiple digital images of the person at least approximately contemporaneously with receiving the spoken utterance from the person;
first data processing means for receiving the digitized spoken utterance and digital images of the person and correlating them together to form a biometric template for the person;
memory means for storing prerecorded audio and video data as individual templates of individual people; and
second data processing means for receiving the biometric template and comparing it for a match with one of the stored templates of audio and video data.

13. The security system of claim 12 wherein the biometric template includes a three-dimensional vector with the digitized spoken utterance and multiple digital images.

14. The security system of claim 12 wherein:
the audio input means receives multiple audio data markers during a security session;
the video input means receives multiple frames of video during the security session; and
the first processing means accumulates the multiple audio data markers and multiple frames of video and correlates them together to form the biometric template.

15. The security system of claim 12 wherein the video input means includes a color video sensor, a black & white video sensor, and an infrared video sensor.

16. The security system of claim 15 wherein:
the color video sensor is configured to capture one or more digital images of the person's face;
the black & white video sensor is configured to capture one or more digital image of the person's face; and
the infrared video sensor is configured to capture one or more digital images of the person's skin surface blood vessels and/or skin temperature.

17. The security system of claim 12 wherein the video input means is configured to capture one or more digital images of the person's face to create a blood vessel face map and/or a three-dimensional mask image of the person's face.

18. The security system of claim 12 wherein the audio input means includes a voice spectrograph.

19. A monitoring method for use with a person, the method comprising:
receiving voice data representing an predetermined utterance of the person, wherein the voice data representing the predetermined utterance forms an audio biometric feedback component for the person;
receiving multiple digital images of the person, wherein the digital images form a video biometric feedback component for the person;
correlating the received voice data and the received digital images to form a biometric record for the person;
storing prerecorded audio and video data records for each of multiple individual people;
comparing the biometric record for the person to the stored audio and video data records; and
making a decision based on the comparing of the biometric record for the person to the stored audio and video data records.

20. A method of claim 19, further comprising:
receiving digital images that include at least one image of skin surface blood vessels and/or skin temperature; and
storing with at least some of the records at least one baseline digital image of skin surface blood vessels and/or skin temperature for individual people.
